# EUROPÄISCHE PATENTSCHRIFT

(11) **EP 0 630 313 B1**
(45) Veröffentlichungstag und Bekanntmachung des Hinweises auf die Patenterteilung: **12.02.1997**
(21) Anmeldenummer: 93906517.3
(22) Anmeldetag: 13.03.1993
(51) Int. Cl.: B25J 15/04

(54) **MANIPULATOR**
MANIPULATOR
MANIPULATEUR

(30) Priorität: 13.03.1992 DE 9203374 U
(43) Veröffentlichungstag der Anmeldung: 28.12.1994
(73) Patentinhaber: Städele, Berta, W-88697 Bermatingen (DE)
(72) Erfinder: STÄDELE, Erhard, verstorben (DE)
(74) Vertreter: Weiss, Peter, Dr. rer. nat.
(86) Internationale Anmeldenummer: EP9300579
(87) Internationale Veröffentlichungsnummer: WO9317838

(56) Entgegenhaltungen:
- DE-A- 3 400 527
- DE-A- 3 514 167
- FR-A- 1 260 698
- FR-A- 2 598 668
- US-A- 4 913 617

## Beschreibung

Die Erfindung betrifft eine Einrichtung zum Manipulieren von Gegenständen mit einem Manipulator mit zumindest einem Arm, an dem über ein Kupplungsstück ein Handlinggerät lösbar festgelegt ist, wobei im Kupplungsstück von außen her betätigbare und gegen eine Feder abgestützte Gleitbolzen zum Lösen einer Verriegelung zwischen Kupplungsstück und Handlinggerät angeordnet sind und wobei dem Manipulator ein Magazin zur Aufnahme des Handlinggerätes mittels Streifen zugeordnet ist und diese Streifen jeweils zwei etwa parallel verlaufenden Schienen zum Betätigen der Gleitbolzen angeformt sind.

Derartige Manipulatoren sind in vielfältiger Form und Ausführung bekannt. Sie dienen vor allem zum Manipulieren und Bedienen von Gegenständen, beispielsweise in Reinräumen oder in kerntechnischen Anlagen. Zweck der Manipulatoren ist, daß der Benutzer nicht in Berührung mit den zu handhabenden Gegenständen kommt.

Werden Gegenstände, beispielsweise Kernbrennstäbe od. dgl., gegriffen und umgesetzt oder bedient, so ist ein entsprechendes Handlinggerät zu diesem Zweck ausgestaltet und beispielsweise als Greifer ausgebildet. In anderen Fällen sind wiederum andere Tätigkeiten notwendig, die ein anderes Handlinggerät erfordern. Somit besteht das Problem, in Räumen, welche einem Benutzer nicht zugänglich sind, Handlinggeräte unterschiedlicher Art und Ausgestaltung an einem Manipulator auszutauschen bzw. zu magazinieren. Dies ist Aufgabe der vorliegenden Erfindung.

Aus der DE-A 34 00 527 ist ein Industrieroboter bekannt, bei welchem Arbeitswerkzeuge an einem Roboterarm lösbar festgelegt sind. Ferner ist dem Industrieroboter eine Ablagevorrichtung zugeordnet, auf welcher das Arbeitswerkzeug abgelegt werden kann. Zum Lösen des Arbeitswerkzeuges fährt eine konisch sich verjüngende Gabel in einen schlitzförmigen Durchbruch und betätigt Schwenkhebel, welche eine Verriegelung lösen. Diese geschieht durch einen extra zu betätigenden Hydraulikzylinder für die Gabel, nachdem das Arbeitswerkzeug durch eine Klemmeinrichtung auf einem Ablageblock festgelegt worden ist.

Aus der US-A 4 913 617 ist ein Magazin für Werkzeuge einer Roboterhand bekannt, bei dem das Werkzeug zwischen zwei Schieber eingeschoben wird und zugespitzte Stangen in Löcher in Gleitbolzen eingreifen und diese Gleitbolzen nach außen ziehen. Das Einführen des Werkzeuges in ein derartiges Magazin bedarf einer sehr genauen Zentrierung, damit die zugespitzen Stäbe die Löcher in den Gleitbolzen treffen.

Aus der DE-A 35 14 167 (nächstliegender Stand der Technik) ist eine Roboterhand mit einem Werkzeug bekannt, bei dem das Werkzeug in ein Öffnungsglied eingeschoben wird und dabei das Öffnungsglied Verriegelungsschieber betätigt, welche das Werkzeug freigeben. Durch das Öffnungsglied wird somit sowohl die Halterung als auch die Betätigung der Verriegelungsschiene bewirkt.

Diesen drei Vorrichtungen ist ferner gemeinsam, dass die eigentliche Kupplungseinrichtung im Werkzeug selbst angeordnet ist. Das bedeutet, daß jedes Werkzeug eine entsprechende Kupplungseinrichtung mit den technischen Ausgestaltungen aufweisen muß.

Eine Einrichtung der o.g. Art, bei welcher sich das Kupplungsstück am Roboterarm selbst befindet, ist aus der FR-A 2 598 668 bekannt. Dort wird gezeigt, daß ein Werkzeug in einem Roboterarm von Riegeln gehalten wird. Diese Riegel sind von einer Manschette umfangen, welche Nuten zur Aufnahme eines Halters besitzt. Zum Lösen des Werkzeuges wird die Manschette zuerst in den Halter eingefahren und sodann die Manschette verschoben, bis die Riegel in Ausnehmungen im Inneren der Manschette eingleiten können und dadurch das Werkzeug freigeben. Das Verschieben der Riegel geschieht unter Reibung von Steigflächen an den Riegeln und konischen Flächen in einem Zapfen des Werkzeuges.

Der vorliegenden Erfindung liegt die Aufgabe zugrunde, eine Einrichtung der o.g. Art zu entwickeln, welche einfacher herzustellen ist und bei der trotzdem ein automatisches Lösen des Werkzeuges von dem Arm des Manipulators durchgeführt werden kann.

Zur Lösung dieser Aufgabe führt, daß der Gleitbolzen in einer Querbohrung quer zu einer Längsachse des Kupplungsstückes angeordnet ist und unterhalb der Querbohrung eine weitere quer zur Längsachse verlaufende Kammer vorgesehen ist, in welcher ein Riegel läuft, wobei der Riegel mit dem Gleitbolzen über einen Schwenkhebel verbunden ist.

D.h., das Handlinggerät wird mittels des Manipulators in das Magazin eingeschwenkt, wobei die Streifen in entsprechende Kanäle in dem Handlinggerät einfahren und so das Handlinggerät im Magazin festgelegt wird. Gleichzeitig drücken aber auch die Schienen auf die oben erwähnten Gleitbolzen, so daß eine Verriegelung in dem Kupplungsstück zwischen Kupplungsstück und Handlinggerät gelöst wird.

Damit ein Einschwenken und Einführen bzw. auch ein Einschieben der Gleitbolzen erleichtert ist, sollte das Magazin eine trichterförmige Magazinöffnung haben, die sich nach innen verjüngt. Hierdurch fahren die Streifen leichter in die Kanäle ein und die Gleitbolzen können an den Trichterwänden entlanggleiten und so nach innen geführt werden.

Das Problem der Entriegelung ist mittels eines bzw. mehrerer Riegel gelöst, welche durch den bzw. die Gleitbolzen bewegt werden. Dabei ist der Gleitbolzen über einen Schwenkhebel mit einem Riegel verbunden, wobei der Schwenkhebel einen ortsfesten Drehpunkt aufweist. Gleitbolzen und Riegel sind übereinander im Kupplungsstück angeordnet, so daß sie über den Schwenkhebel eine gegenläufige Bewegung durchführen. Sitzt beispielsweise das Handlinggerät mit einem Zapfen in einer Stufenbohrung in dem Kupplungsstück und greift dort der Riegel mit einer Rastnase in eine Ringnut des Zapfens ein, so fährt diese Rastnase bei einem Eindrücken des Gleitbolzens in das Kupplungsstück aus der Riegelstellung und gibt so den Zapfen frei. Dies ist eine einfache aber sehr wirkungsvolle Ausgestaltung der Verriegelung.

Damit der Gleitbolzen in seine Ausgangslage zurück gelangt, stützt er sich in seiner Querbohrung gegen eine Schraubenfeder ab. Dies ist wichtig bei der Wiederaufnahme des Handlinggerätes. Zum Wiederaufnehmen des Handlinggerätes wird nämlich das Kupplungsstück in das Magazin wiederum durch die trichterförmige Mündungsöffnung eingeschwenkt, wobei die Gleitbolzen nach innen fahren. Damit gelangen die Riegel aus ihrer Riegelposition und das Kupplungsstück kann auf das Handlinggerät aufgesetzt werden, wobei die Stufenbohrung in dem Kupplungsstück den Zapfen in sich aufnimmt. Nunmehr wird über den Manipulator das Kupplungsstück mit dem Handlinggerät aus dem Magazin ausgefahren, wobei in der trichterförmigen Magazinöffnung die Gleitbolzen aus dem Kupplungsstück herausfahren und dabei gleichzeitig über die Schwenkhebel die Riegel zu Zapfen des Handlinggerätes hin bewegen. Die Riegel fahren dann in die o.g. Ringnut des Zapfens ein, wodurch das Handlinggerät an dem Kupplungsstück gesichert festgelegt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen teilweise dargestellten Längsschnitt aus einem Kupplungsbereich zwischen einem Arm eines Manipulators und einem Handlinggerät;
Figur 2 eine teilweise im Querschnitt dargestellte Draufsicht auf den Kupplungsbereich gemäß Figur 1 bei einem Entkupplungsvorgang in einem Magazin.

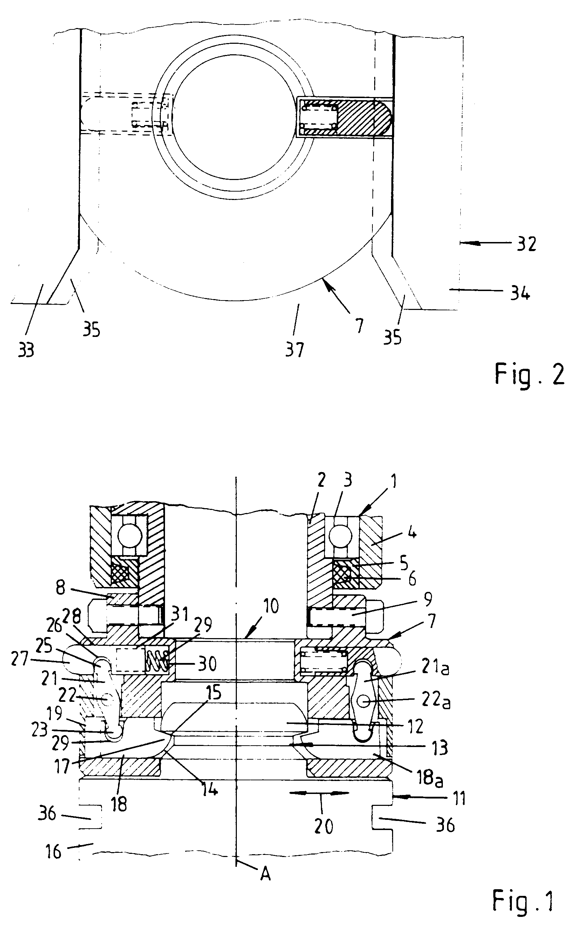

In Figur 1 ist das Ende eines Armes 1 eines nicht näher gezeigten Manipulators erkennbar, wobei ein Innenrohr 2 über ein Kugellager 3 gegen ein Außenrohr 4 abgestützt ist. Das Innenrohr 2 dreht in dem Aussenrohr 4. Eine Abstützung und eine Abdichtung übernimmt ein Stützring 5 sowie ein Dichtring 6.

Das Innenrohr 2 schaut mit einem Kragen aus dem Aussenrohr 4 und greift mit diesem Kragen in einen Ringkragen 8 eines Kupplungsstückes 7 ein. Dort ist der Kragen über entsprechende Gewindeschrauben 9 mit dem Ringkragen 8 des Kupplungsstückes 7 verbunden.

Das Kupplungsstück 7 besitzt eine axiale Stufenbohrung 10, in welche in Gebrauchslage ein Handlinggerät 11, beispielsweise eine Greifeinrichtung, eingesetzt ist. Hierzu ist dem Handlinggerät 11 ein Zapfen 12 angeformt, welcher eine Ringnut 13 aufweist. Diese Ringnut 13 besitzt zwei Nutwände 14 und 15, wobei die einem Gerätekörper 16 nähere Nutwand 14 abgeschrägter verläuft, als die gegenüberliegende Nutwand 15.

In Gebrauchslage wird die Nutwand 15 von einer Rastnase 17 eines Riegels 18 untergriffen, wobei dieser Riegel 18 quer zu einer Längsachse A in dem Kupplungstück 7 bzw. in einem sich quer zur Längsachse A erstreckenden Kammer 19 verschiebbar gelagert ist. In Figur 1 befindet sich linksseitig der Riegel 18 in einer Gebrauchslage, in welcher er die Nutwand 15 untergreift, wobei er in die Ringnut 13 eingefahren ist. Hierdurch wird das Handlinggerät 11 gehalten. Auf der rechten Seite in Figur 1 ist erkennbar, daß der dort gezeigte Riegel 18a bereits zum Teil aus der Ringnut 13 gezogen ist, so daß das Handlinggerät 11 hierdurch freigegeben wird.

Die Bewegung der Riegel 18 und 18a in Richtung des Doppelpfeiles 20 erfolgt mittels Schwenkhebel 21 und 21a, welche mittig einen Drehpunkt 22 bzw. 22a in dem Kupplungsstück 7 besitzen. Dieser Schwenkhebel 21 bzw. 21a greift mit einem Kopf 23 in eine entsprechende Ausnehmung 24 in den Riegel 18 ein. Auch andererseits ist dem Schwenkhebel 21 ein Kopf 25 angeformt, welcher in einer entsprechenden Ausnehmung 26 eines Gleitbolzens 27 sitzt. Dieser Gleitbolzen 27 ist ebenfalls quer zur Längsachse A verschiebbar in einer Querbohrung 28 in dem Kupplungsstück 7 gelagert, wobei er sich über eine Schraubenfeder 29 gegen einen Grund 30 dieser Querbohrung 28 abstützt. Bevorzugt wird die Schraubenfeder 29 in einem nur gestrichelt angedeuteten Sackloch 31 in dem Gleitbolzen 27 geführt.

Somit verläuft die Bewegung des Gleitbolzens 27 etwa parallel zu der Bewegung des Riegels 18, jedoch infolge des Schwenkhebels 21 in umgekehrter Richtung. Werden somit die beiden sich gegenüberliegenden Gleitbolzen 27 gegen die Kraft der Schraubenfedern 29 nach innen gedrückt, so erfolgt ein Ausschwenken der Riegel 18 und 18a aus der Ringnut 13. Hierdurch wird der Zapfen 12 und damit das Handlinggerät 11 freigegeben.

Ein derart ausgestaltetes Kupplungsstück 7 mit den Gleitbolzen 27 und den Riegeln 18 ermöglicht im Zusammenspiel mit einem in Figur 2 angedeuteten Magazins 32 ein automatisches wechseln von Handlinggeräten 11. Dieses Magazin 32 besteht im wesentlichen aus zwei parallel verlaufenden Schienen 33 und 34, wobei beide Schienen 33 und 34 etwa spiegelbildlich identisch ausgebildet sind. Jeder Schiene ist ein Streifen 35 angeformt, welcher in einen Kanal 36 paßt, der wiederum in den Gerätekörper 16 eingeformt ist. Da zwei Streifen 35 im Magazin 32 vorgesehen sind, besitzt auch der Gerätekörper 16 zwei derartige Kanäle 36. Ferner soll eine Magazinöffnung 37 etwa konisch verlaufen. Zum Wechseln des Handlinggerätes 11 wird der Arm 1 mit dem Handlinggerät 11 in die Magazinöffnung 37 eingeschwenkt, wobei die Streifen 35 in die Kanäle 36 einfahren. Hierdurch wird das Handlinggerät 11 im Magazin 32 festgelegt. Gleichzeitig erfolgt aber ein Eindrücken der Gleitbolzen 27 durch die Schienen 33 und 34, so daß die Riegel 18 und 18a aus ihrer Riegelposition in der Ringnut 13 herausgeschwenkt werden. Dadurch ist nun das Kupplungsstück 7 von dem Handlinggerät 11 gelöst und kann nach oben aus dem Magazin 32 gezogen werden.

Zum Ankuppeln des Kupplungsstückes 7 wieder an das Handlinggerät 11 fährt dieses Kupplungsstück 7 in die Magazinöffnung 37 ein, so daß die Gleitbolzen 27 gegen die Kraft der Schraubenfedern 29 nach innen geschoben werden. Die Höhe der Schienen 33 und 34 sind dabei so ausgelegt, daß das Kupplungsstück 7 den Zapfen 12 mit eingeschobenem Gleitbolzen 27 überfahren kann. Danach erfolgt ein Absenken des Kupplungsstückes 7 auf das Handlinggerät 11. Mit dem Arm 1 werden Kupplungsstück 7 und Handlinggerät 11 aus dem Magazin 32 herausgezogen, wobei beim Austritt aus der Magazinöffnung 37 die Gleitbolzen 27 dem Druck der Schraubenfedern 29 nachgeben und die Riegel 18 und 18a mit ihren Rastnasen 17 in die Ringnut 13 des Zapfens 12 einschwenken. Hierdurch ist das Handlinggerät 11 gesichert an dem Kupplungsstück 7 gehalten.

## Patentansprüche

1. Einrichtung zum Manipulieren von Gegenständen mit einem Manipulator mit zumindest einem Arm, welcher ein Kupplungsstück (7) aufweist, in welchem Gleitbolzen (27) zum Lösen einer Verriegelung zwischen Kupplungsstück (7) und einem Handlinggerät (11) angeordnet sind, wobei dem Manipulator ein Magazin (32) zur Aufnahme des Handlinggerätes (11) mittels Streifen (35) zugeordnet ist und diese Streifen (35) jeweils zwei etwa parallel verlaufenden Schienen (33, 34) zum Betätigen der Gleitbolzen (27) angeformt sind,
dadurch gekennzeichnet,
daß der Gleitbolzen (27) in einer Querbohrung (28) quer zu einer Längsachse (A) des Kupplungsstückes (7) angeordnet ist und unterhalb der Querbohrung (28) eine weitere quer zur Längsachse (A) verlaufende Kammer (19) vorgesehen ist, in welcher ein Riegel (18) läuft, wobei der Riegel (18) mit dem Gleitbolzen über einen Schwenkhebel (21) verbunden ist.

2. Einrichtung nach Anspruch 1, dadurch gekennzeichnet, daß der Schwenkhebel (21) etwa mittig einen Drehpunkt (22) aufweist, und beidends mit jeweils einem Kopf (23 bzw. 25) sowohl in einer Ausnehmung (24) in dem Riegel (18) als auch in einer Ausnehmung (28) in dem Gleitbolzen (27) eingreift.

3. Einrichtung nach einem der Ansprüche 1 oder 2, dadurch gekennzeichnet, daß der Riegel (18, 18a) mit einer Rastnase (17) in eine Ringnut (13) eines Zapfens (12) eingreift, welcher dem Handlinggerät (11) angeformt ist.

4. Einrichtung nach einem der Ansprüche 1 bis 3, dadurch gekennzeichnet, daß sich der Gleitbolzen (17) gegen eine Schraubenfeder (29) in der Querbohrung (28) abstützt.

5. Einrichtung nach wenigstens einem der Ansprüche 1 - 4, dadurch gekennzeichnet, daß eine Magazinöffnung (37) trichterförmig ausgebildet ist, wobei sich der Abstand der beiden Schienen (33, 34) und der Streifen (35) von der Magazinöffnung (37) nach innen verjüngt.

## Claims

1. Arrangement for the manipulation of articles, having a manipulator with at least one arm, which comprises a coupling member (7), in which slide bolts (27) are disposed for releasing a locking connection between coupling member (7) and a handling apparatus (11), a storage unit (32) being associated with the manipulator for the accommodation of the handling apparatus (11) by means of strips (35), and these strips (35) are respectively shaped to fit on two bars (33, 34) extending substantially parallel for the actuation of the slide bolts (27), characterised in that the slide bolt (27) is disposed in a transverse bore (28) perpendicular to a longitudinal axis (A) of the coupling member (7), and an additional chamber (19) is provided beneath the transverse bore (28), which chamber extends perpendicular to the longitudinal axis (A), and in which chamber a locking bolt (18) extends, the locking bolt (18) being connected to the slide bolt via a pivotal lever (21).

2. Arrangement according to claim 1, characterised in that the pivotal lever (21) has a pivot point (22) substantially centrally and engages at both ends with a respective head (23 or 25 respectively) both in a recess (24) in the locking bolt (18) and in a recess (28) in the slide bolt (27).

3. Arrangement according to one of claims 1 or 2, characterised in that the locking bolt (18, 18a) engages in an annular groove (13) of a pin (12) by means of a locking projection (17), which pin is shaped to fit on the handling apparatus (11).

4. Arrangement according to one of claims 1 to 3, characterised in that the slide bolt (17) is supported against a helical spring (29) in the transverse bore (28).

5. Arrangement according to at least one of claims 1 - 4, characterised in that a storage unit aperture (37) has a funnel-shaped configuration, the spacing of the two bars (33, 34) and of the strips (35) from the storage unit aperture (37) tapering inwardly.

## Revendications

1. Dispositif servant à manipuler des objets par l'intermédiaire d'un manipulateur comportant au moins un bras d'une pièce d'accouplement (7) équipée de broches glissantes (27) servant à dégager un verrouillage entre la pièce d'accouplement (7) et un appareil de manutention (11), un magasin (32) étant associé au manipulateur pour recevoir l'appareil de manutention par l'intermédiaire de barres (35) dont chacune est constituée de deux rails (33, 34) sensiblement parallèles servant à actionner les broches glissantes(27),
caractérisé en ce que
chaque broche glissante (27) est montée dans un alésage transversal (28) perpendiculaire à l'axe longitudinal (A) de la pièce d'accouplement (7) tandis qu'en dessous de cet alésage (28), il est prévu également une chambre (19) transversale par rapport à l'axe (A) et dans laquelle se déplace un verrou (18) relié à la broche glissante par un levier oscillant (21).

2. Dispositif selon la revendication 1,
caractérisé en ce que
le levier oscillant (21) présente sensiblement en son milieu un point de rotation (22) et, à chacune de ses extrémités, une tête (23 et 25), respectivement en prise avec un évidement (24) de verrou et un évidement (28) dans la broche glissante (27).

3. Dispositif selon la revendication 1 ou 2,
caractérisé en ce que
le verrou (18, 18a) est en prise par une extrémité d'arrêt (17) dans une gorge annulaire (13) d'un pivot (12) porté par l'appareil de manutention (11).

4. Dispositif selon une des revendications 1 à 3,
caractérisé en ce que
la broche glissante (17) est en appui dans l'alésage transversal (28) par l'intermédiaire d'un ressort hélicoïdal (29).

5. Dispositif selon au moins une des revendications 1 à 4,
caractérisé en ce qu'
il comporte une ouverture du magasin (37) en forme d'entonnoir, l'espacement entre les deux rails (33, 34) et les barres (34) allant en se réduisant de l'ouverture du magasin (37) vers l'intérieur.
